# EUROPEAN PATENT SPECIFICATION

(11) **EP 2 874 054 B1**
(45) Date of publication and mention of the grant of the patent: **11.10.2017**
(21) Application number: 13869699.2
(22) Date of filing: 05.11.2013
(51) Int. Cl.: G06F 3/0484

(54) **APPLICATION TEXT ADJUSTING METHOD, DEVICE, AND TERMINAL**
VERFAHREN ZUR EINSTELLUNG VON ANWENDUNGSTEXTEN, VORRICHTUNG UND ENDGERÄT
PROCÉDÉ, DISPOSITIF ET TERMINAL D'AJUSTEMENT DE TEXTE D'APPLICATION

(30) Priority: 28.12.2012 CN 201210589852
(43) Date of publication of application: 20.05.2015
(73) Proprietor: Xiaomi Inc., Beijing 100085 (CN)
(72) Inventor: LIU, Xinyu, Beijing 100085 (CN); WEN, Zhenwei, Beijing 100085 (CN); CHENG, Yue, Beijing 100085 (CN)
(74) Representative: Hanna Moore + Curley
(86) International application number: PCT/CN2013/086566
(87) International publication number: WO 2014/101570

(56) References cited:
- WO-A1-2012/056337
- WO-A1-2012/056337
- CN-A- 101 052 182
- CN-A- 103 076 955
- JP-A- 2011 198 144

## Description

### TECHNICAL FIELD

The present disclosure generally relates to the technical field of display of user interface, and more particularly, to a method, a device and a terminal for adjusting an application's characters and font size.

### BACKGROUND

With the development of software technology, more and more applications are developed and applied on cell phones, which greatly facilitates and enriches people's life. However, applications are limited by the screen size of a cell phone. The more contents to be presented, the smaller the displayed font size will be. Generally, the default word size of an application set on a cell phone can meet most people's requirements. However, common smart cellphones provide the function of changing application's font size to accommodate different people, For example, a cellphone can offer a "Magnification" setting for font size to allow users with poor vision or older users to magnify characters of applications.

At present, a common manner for changing application's font size is that the terminal system provides a setting item for the user to select a proportion for scaling characters, such as 120% magnification and 150% magnification. Then the terminal system scales characters everywhere of the application once according to the selected proportion for display, for example, magnifying all characters of the application once to the 120% of original size.

The above-mentioned technical solution globally scales characters of the application to the set proportion once. Such a one-fits-all approach may cause some application's display interface to become messy, even some information in the application to be cropped and forced out of the display screen.

The relevant state of the art is represented by WO-A-2012/056337 which describes responding to the receipt of zoom commands. The general solution offered by a zoom function enables a user to zoom in on text. The drawback however is that by zooming in, some text is "cut off" and not displayed on the screen. This in turn requires the user to scroll back and forth on the screen in order to read the text outside the screen.

JP2011198144, describes portable equipment having an electronic book reader function. A scaling key for operating the character data (or image) is also provided as well as a control part which displays the characters/image in a predetermined layout on a screen. The control part is configured to control enlargement of the characters/image when the scaling key is pressed. This means that if a user wishes to increase the size of characters on the screen, he has to press the scaling key as often until the desired size of characters is reached. However, no cropping of the displayed text takes place, hence further keys are provided for the user to press if he wishes to move the text to either the left or the right.

### SUMMARY

In order to ensure that the application's display interface can maintain neat and adjusted characters can still be adapted to the application's display interface during the process of adjusting an application's characters, the present invention provides a method, a device and a terminal for adjusting an application's characters, in accordance with claims which follow.

In one aspect, the present disclosure provides a method for adjusting an application's characters including: a command for adjusting application's characters with a first scaling coefficient is received; it is determined whether there is a second scaling coefficient based on said first scaling coefficient with respect of said application; said application's characters are adjusted according to said first scaling coefficient if there is no second scaling coefficient based on said first scaling coefficient for said application; said application's characters are adjusted according to said second scaling coefficient if there is a second scaling coefficient based on said first scaling coefficient with respect to said application.

In another aspect, the present disclosure provides a device for adjusting an application's characters including: a receiving module configured to receive a command for adjusting application's characters with a first scaling coefficient; a determining module configured to determine whether there is a second scaling coefficient based on said first scaling coefficient with respect to said application; a first adjusting module configured to adjust said application's characters according to said first scaling coefficient if there is no second scaling coefficient based on said first scaling coefficient with respect to said application; a second adjusting module configured to adjust said application's characters according to said second scaling coefficient if there is a second scaling coefficient based on said first scaling coefficient with respect to said application.

In yet another aspect, the present disclosure provides a terminal including the above-mentioned device for adjusting an application's characters.

Embodiments of the present disclosure may include the following beneficial effects. In the embodiment of the present disclosure, when the command of adjusting the application's characters with the first scaling coefficient is received and it is determined there is a second scaling coefficient based on said first scaling coefficient with respect to said application, said application's characters are adjusted according to said second scaling coefficient, and if there is no second scaling coefficient based on said first scaling coefficient with respect to said application, said application's characters are adjusted according to said first scaling coefficient. The application's characters are flexibly adjusted level by level to allow the application's characters to be adaptively adjusted level by level to fit the application's display interface and to prevent the characters from being cropped and forced out of the screen after adjustment. In addition, adjusting the application's characters level by level is implemented simply and effectively.

It is appreciated that the above general description and the following detail description are only illustrative rather than limiting the disclosure.

### BRIEF DESCRIPTION OF THE DRAWINGS

Fig. 1 is an example flow chart showing a method for adjusting application's characters according to an embodiment of the present disclosure.
Fig. 2 is an example flow chart showing a method for adjusting application's characters according to an embodiment of the present disclosure.
Figs. 3a and 3b are schematic diagrams showing display status of a desktop application in different font modes according to embodiments of the present disclosure.
Figs. 4a, 4b and 4c are schematic diagrams showing display status of an address list in different font modes according to embodiments of the present disclosure.
Fig. 5 is a structure diagram of a device for adjusting application's characters according to an embodiment of the present disclosure.
Fig. 6 is a structure diagram of a device for adjusting application's characters according to an embodiment of the present disclosure.

The above-mentioned accompanying drawings have shown definite embodiments of the present disclosure which will be described in detail below. These accompanying drawings and literal description are not intended to limit the scope conceived by the present disclosure in any way but to explain concepts of the present disclosure for those skilled in the art with reference to certain embodiments.

### DETAILED DESCRIPTION

Specific implementations of the method, the device and the terminal for adjusting application's characters according to embodiments of the present disclosure will be described in detail below with reference to the accompanying drawings.

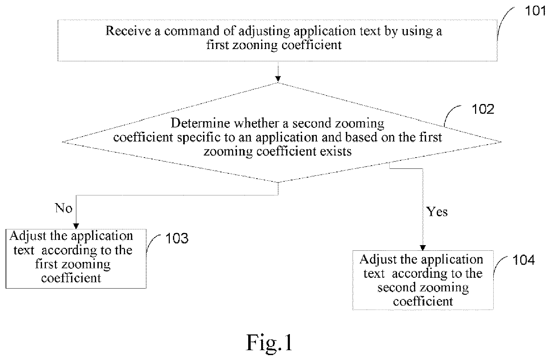

As shown in Fig. 1, the method for adjusting application's characters according to an embodiment of the present disclosure may specifically include the following steps.

In step 101, a command for adjusting application's characters with a first scaling coefficient is received.

In this embodiment, the command for adjusting application's characters with the first scaling coefficient may be received by a set man-machine interaction interface. The man-machine interaction interface may be a selection menu, a selection icon or a selection key of scaling coefficients.

In an embodiment, the selection menu of scaling coefficients may be provided to the user in the system's menu. In the selection menu, tags of scaling coefficients are offered such that the user can access the selection menu of scaling coefficients level by level through the system's main menu to select the scaling coefficient for adjustment.

Alternatively, selection icons of scaling coefficients may be provided to the user on the application's display interface, and different selection icons are corresponding to different scaling coefficients, such that the user can select the scaling coefficient for adjustment by clicking the selection icon.

Alternatively, selection keys of scaling coefficients may be provided to the user such that the user can select the scaling coefficient for adjustment by clicking said selection key.

In step 102, it is determined whether there is a second scaling coefficient based on the first scaling coefficient with respect to the application.

In an embodiment, the descriptive information in the scaling permission description field of the application may be read, said scaling permission description field is configured to describe whether there is a second scaling coefficient based on the first scaling coefficient with respect to the application, for example said scaling permission description field may be Androidmanifest.xml. And it is determined whether there is the second scaling coefficient based on the first scaling coefficient with respect to the application according to the descriptive information being read. For example, if the descriptive information of Androidmanifest.xml is true, there is the second scaling coefficient based on the first scaling coefficient with respect to the application.

Step 103 is executed if there is no second scaling coefficient based on the first scaling coefficient with respect to the application.

Step 104 is executed if there is the second scaling coefficient based on the first scaling coefficient with respect to the application.

In step 103, the application's characters are adjusted according to the first scaling coefficient.

In an embodiment, font size and layout of the application's characters may be adjusted according to the first scaling coefficient. In particular, the application's character library corresponding to the first scaling coefficient is obtained through inquiring a stored mapping between the scaling coefficients and the application's character libraries, and the application's characters are adjusted to the inquired character library corresponding to the first scaling coefficient.

In an embodiment, prior to adjusting the application's characters according to the first scaling coefficient, to the method may include determining whether the font size of the application's characters reaches a predetermined threshold. If the font size of the application's characters has not reach the predetermined threshold, the application's characters are adjusted according to the first scaling coefficient. If the font size of the application's characters reached the predetermined threshold, the application's characters are adjusted to the system's default characters.

In the embodiment, prior to adjusting the application's characters according to the first scaling coefficient, the adjustment process is limited intelligently, that is, if the font size of the application's characters reaches the predetermined threshold, adjustment is not further implemented and the application's characters are adjusted back to the system default characters, so as to further ensure the display effect of the application's characters after scaling, and to avoid blurring of the application's characters due to over scaling.

In step 104, the application's characters are adjusted according to the second scaling coefficient.

In an embodiment, the font size and layout of the application's characters may be adjusted according to the scaling coefficient. In particular, a character library corresponding to the scaling coefficient is obtained through inquiring the stored mapping between the second scaling coefficients and the application's character libraries, and the application's characters are adjusted to the inquired character library corresponding to the second scaling coefficient.

In an embodiment, prior to adjusting the application's characters according to the scaling coefficient, the method further include determining whether the font size of the application's characters reaches a predetermined threshold. If the font size of the application's characters has not reach the predetermined threshold, the application's characters are adjusted according to the second scaling coefficient. If the font size of the application's characters reaches the predetermined threshold, the application's characters are adjusted according to the first scaling coefficient.

In the embodiment, prior to adjusting the application's characters according to the second scaling coefficient, the adjustment process is limited intelligently, that is, if the font size of the application's characters reaches the predetermined threshold, the application's characters are adjusted according to the first scaling coefficient again, to further ensure the display effect of the application's characters after scaling, and to avoid blurring of the application's characters due to over scaling.

In the embodiment, the second scaling coefficient is set according to the first scaling coefficient, such that the application may be adjusted again with the second scaling coefficient after the application's characters are adjusted according to the first scaling coefficient. For example, during the process of magnifying the font size of the application's characters, the first scaling coefficient is set to 1.1 (that is, the application's characters are magnified by a factor of 1.1 on the basis of the system default font size), then the second scaling coefficient may be set to 1.2 (that is, the application's characters may be magnified by a factor of 1.2 on the basis of the system default font size), such that after the application's characters are adjusted according to the first scaling coefficient, the application may be further magnified according to the second scaling coefficient if allowed.

In the embodiment of the present disclosure, when receiving the command of adjusting the application's characters with the first scaling coefficient and determining there is a second scaling coefficient based on said first scaling coefficient with respect to said application, said application's characters are adjusted according to said second scaling coefficient; and if there is no second scaling coefficient based on said first scaling coefficient with respect to said application, said application's characters are adjusted according to said first scaling coefficient. The application's characters are flexibly adjusted level by level, so as to allow the application's characters to be adaptively adjusted level by level to fit the application's display interface and to prevent the characters from being cropped and forced out of the screen after adjustment. In addition, it is implemented simply and effectively to adjust the application's characters level by level.

The technical proposal shown in Fig. 1 will be described in detail below with respect to specific embodiments.

In an embodiment, a plurality of character system modes are set in advance in which each character system mode corresponds to a plurality of scaling coefficients thereunder and a next scaling coefficient is set according to the previous scaling coefficient. Table 1 shows the mapping between the character system modes and the scaling coefficients.

**Table 1**

| Character system mode | First scaling coefficient | Second scaling coefficient |
|---|---|---|
| Small font mode | 0.9 | 0.8 |
| Standard font mode | 1.0 | 1.0 |
| Intermediate font mode | 1.1 | 1.2 |
| Large font mode | 1.3 | 1.4 |
| Ultra-large font mode | 1.5 | 1.6 |
| ...... | ...... | ...... |

In the embodiment, the first scaling coefficient is a system default safe scaling coefficient. The first scaling coefficient may be obtained by statistics according to the proportion of the display interface occupied by the application's characters font size at different values; and is a safe scaling coefficient under which the application's characters will not be cropped and forced out of the screen. The second scaling coefficient is a selectable coefficient which is described in the application's Androidmanifest.xml and is set by the application's developers according to the application's own layout. Generally, the set second scaling coefficient may be used to further scale the application's characters and to further ensure that the adjusted application's characters would not be cropped and forced out of the screen.

Additionally, in an embodiment, a scaling threshold is also provided. If the application's characters reach the scaling threshold, the application's characters will not be further adjusted according to any scaling coefficient. The application's characters are adjusted according to the determined scaling coefficient such as the first scaling coefficient or the second scaling coefficient only when the application's characters have not reached the scaling threshold, so as to ensure the display effect of the application's characters after scaling and to avoid blurring of the application's characters due to over scaling.

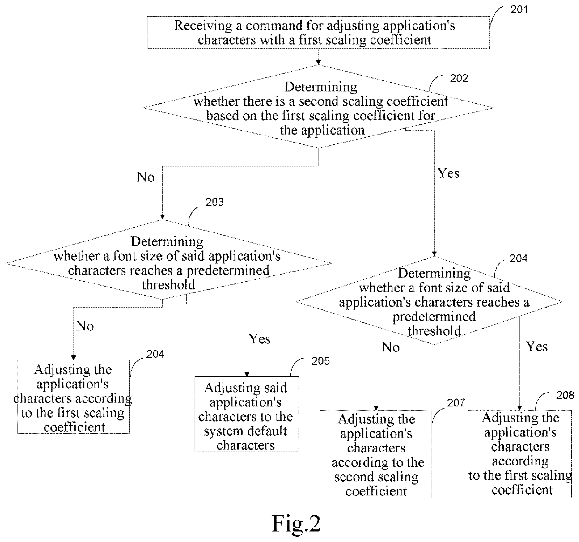

A method for adjusting the application's characters according to the present example will be described in detail below based on the above explanation, as shown in Fig. 2, which may specifically include the following steps.

In step 201, a command for adjusting application's characters with a first scaling coefficient is received.

In an embodiment, the user accesses the character system mode menu level by level through the main menu. The character system mode menu offers respective options for character system modes, such as small font mode, standard font mode, intermediate font mode, large font mode and ultra-large font mode. The user selects a character system mode such as the large font mode. The system accesses the large font mode, and inquires the mapping between the character system modes and the first scaling coefficients to obtain the first scaling coefficient corresponding to the selected character system mode, e.g., the first scaling coefficient 1.3 corresponding to the selected large font mode. A command of adjusting the application's characters with the first scaling coefficient is sent to the processor. The processor receives the command of adjusting the application's characters with the first scaling coefficient and executes step 202.

In step 202, it is determined whether there is a second scaling coefficient based on the first scaling coefficient with respect to the application.

Step 203 is executed if there is no second scaling coefficient based on said first scaling coefficient with respect to the application.

Step 204 is executed if there is the second scaling coefficient based on said first scaling coefficient with respect to the application.

In an embodiment, the descriptive information of the application's Androidmanifest.xml is read. It means the application may be further scaled if a value of the descriptive information of Androidmanifest.xml is1, and then the mapping between the selected character system modes and the second scaling coefficients is inquired to obtain the second scaling coefficient, e.g., 1.4 for the selected large font mode. If a value of the descriptive information of Androidmanifest.xml is 0, it means the application is not allowed to be further scaled, that is, there is no second scaling coefficient based on said first scaling coefficient with respect to the application.

In step 203, it is determined whether the font size of the application's characters reaches the predetermined threshold.

Step 204 is executed if the font size of the application's characters does not reach the predetermined threshold.

Step 205 is executed if the font size of the application's characters reaches the predetermined threshold.

In step 204, said application's characters are adjusted according to the first scaling coefficient and the operations end.

In an embodiment, the font size and layout of the application's characters may be adjusted according to the first scaling coefficient. Particularly, the mapping between the stored scaling coefficients and the application's character libraries is inquired to obtain an application's character library corresponding to the first scaling coefficient, e.g., a character library corresponding to 1.3 times the system default characters, and the application's characters are adjusted to the respective font size and the respective layout corresponding to 1.3 times the system default characters.

In step 205, said application's characters are adjusted to the system default characters and the operations end.

In steps 203 to 205, prior to adjusting the application's characters according to the first scaling coefficient, the adjustment process is limited intelligently, that is, if the font size of the application's characters reaches the predetermined threshold, adjustment is not further implemented and the application's characters are adjusted back to the system default characters, to further guarantee the display effect of the application's characters after scaling, and avoid blurring of the application's characters due to over scaling.

In step 206, it is determined whether the font size of the application's characters reaches the predetermined threshold.

Step 207 is executed if the font size of the application's characters reaches the predetermined threshold.

Step 208 is executed if the font size of the application's characters reaches the predetermined threshold.

In step 207, said application's characters are adjusted according to the second scaling coefficient and the operations end.

In an embodiment, the font size and layout of the application's characters may be adjusted according to the scaling coefficient. In particular, a character library corresponding to the scaling coefficient is obtained through inquiring the mapping between the stored second scaling coefficients and the application's character libraries, e.g., the character library corresponding to 1.4 times the system default characters. The application's characters are adjusted to the respective font size and the respective layout corresponding to 1.4 times the system default characters.

In step 208, the application's characters are adjusted according to the first scaling coefficient and the operations end.

In an embodiment, in step 208, prior to adjusting the application's characters according to the first scaling coefficient, steps 203 to 205 are repeated to ensure the font size of the application's characters will not exceed the predetermined threshold during adjusting the application's characters according to the first scaling coefficient, description thereof refers to descriptions of steps 203 to 205 and will not be repeated.

In steps 206 to 208, prior to adjusting the application's characters according to the second scaling coefficient, the adjustment process is limited intelligently, that is, if the font size of the application's characters reaches the predetermined threshold, the application's characters are adjusted according to the first scaling coefficient again, to further ensure the display effect of the application's characters after scaling, and to avoid blurring of the application's characters due to over scaling.

The above-mentioned technical proposal will be described in detail below with respect to specific application scenarios, which may particularly include the follows.

Application scenario I, adjusting the application's characters on a cell phone's desktop, which is specifically as follows.

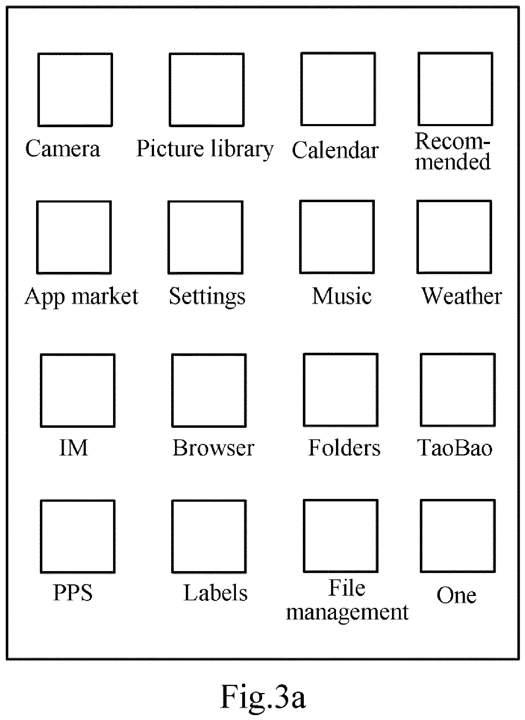

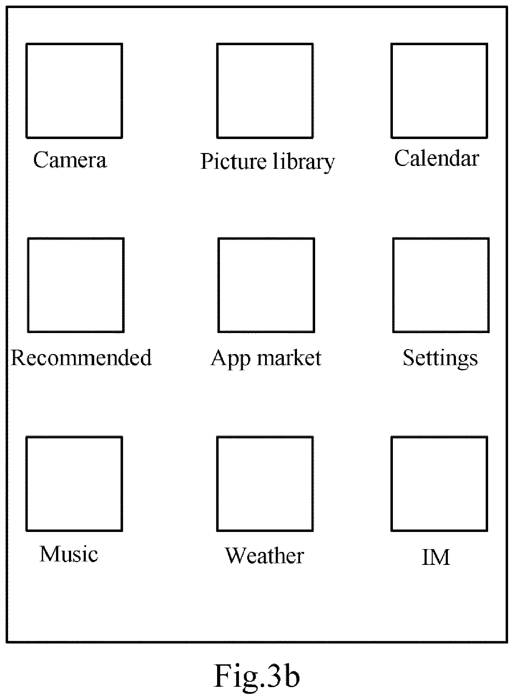

The user selects to adjust the application's characters on the desktop to the large font mode through the selection menu. The cellphone system inquires a first amplification coefficient corresponding to the large font mode, such as 1.3, after receiving the command of adjusting the desktop application's characters to the large font mode. Thereafter, the desktop application's characters are magnified with the first amplification coefficient, which specifically may include magnifying the font size and layout (including icon size) of the desktop applications. Fig. 3a is a schematic diagram of the display status of characters if the desktop application's characters are of normal font. In Fig. 3a, the application's font size and icon size are system default standard sizes, and the display grid of the desktop applications is 4 by 4. The display status of characters when magnifying the application's characters shown in Fig. 3a by a factor of 1.3 to a large font may be as shown in Fig. 3b, in which the display grid of desktop applications becomes 3 by 3 and the application's font size and icons are enlarged by 1.3 times with respect to Fig. 3a. It may be seen that after becoming the large font, the grid of desktop applications changes, and not only icon size changes but also font size changes. In addition, if the character string corresponding to an icon is longer than the length that can be displayed, the longer section may be hidden such that characters will not overlap.

Application scenario II, adjusting characters of the address book, which is specifically as follows.

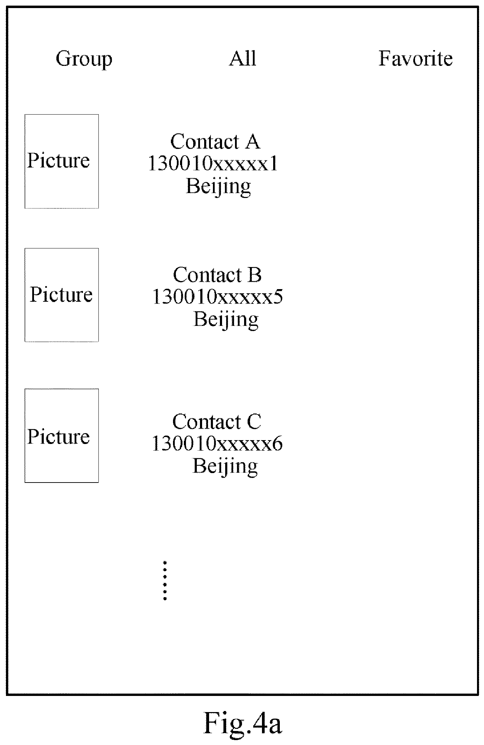

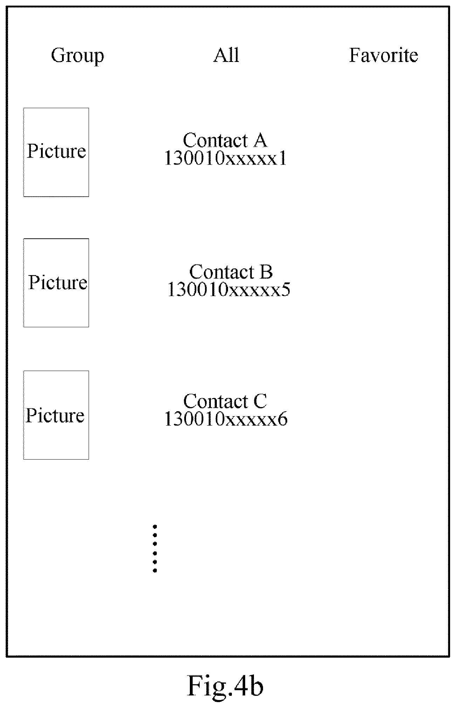

The user selects to adjust the address book's characters to the large font mode through the selection menu. The cellphone system inquires a first amplification coefficient corresponding to the large font mode, such as 1.3, after receiving the command of adjusting the address book's characters to the large font mode. Thereafter, the address book's characters are magnified according to the first amplification coefficient, which may specifically include magnifying the font size, the content, the layout, the picture size and even the interaction function of the address book. Fig. 4a is a schematic diagram of the display status of the address book's characters in normal font characters, in which the application's font size and picture size are system default normal size and the layout in the address book includes picture, name, displayed number and home region. The display status of characters, after magnifying the application's characters shown in Fig. 4a by a factor of 1.3 to a large font, may be as shown in Fig. 4b, in which the layout in the address book becomes picture, name and displayed number and the home region is hidden, and the characters' font size and the pictures are magnified by a factor of 1.3 with respect to Fig. 4a. It may be seen that after becoming the large font, the grid of desktop changes, and not only icon size changes but also font size changes.

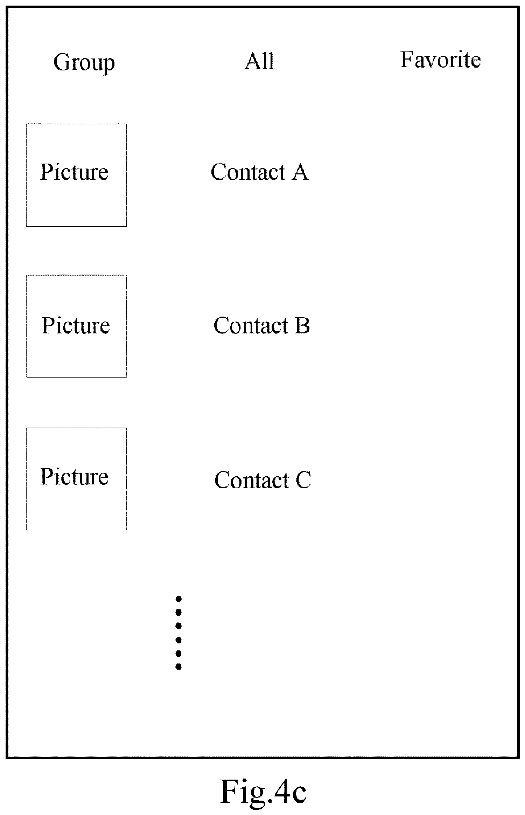

Here, a second magnification may be performed on the characters in the address book shown in Fig. 4b, such as magnifying by 10%, if the address book turns on the second scaling permission, it is obtained through inquiring that the second scaling coefficient under the large font mode is 1.4, and it is determined that the standard font shown in Fig. 4a will not exceed the predetermined font after being magnified by 1.4 times. The display status of the address book after the second magnification may be as shown in Fig. 4c, in which the layout of the address book becomes picture and name and the displayed number is also hidden, and the font size of characters and picture size are 1.4 times larger than Fig. 4a, such as 10% larger than that shown Fig. 4b.

As can be seen from the above description, in the embodiment of the present disclosure, when the command of adjusting the application's characters with the first scaling coefficient is received and it is determined that there is a second scaling coefficient based on said first scaling coefficient with respect to said application, said application's characters are adjusted according to said second scaling coefficient; and if there is no second scaling coefficient based on said first scaling coefficient with respect to said application, said application's characters are adjusted according to said first scaling coefficient. The application's characters are flexibly adjusted level by level to allow the application's characters to be adaptively adjusted level by level to fit the application's display interface and to prevent the characters from being cropped and forced out of the screen after adjustment. In addition, adjusting the application's characters level by level is implemented simply and effectively.

Based on the same inventive concept, an embodiment of the present disclosure further provides a device and a terminal for adjusting the application's characters. Since the principle of solving problems by the device and the terminal is similar to that of the aforementioned method for adjusting application's characters, the implementations of the device and the terminal may refer to those of the method, and repetitions will not be described.

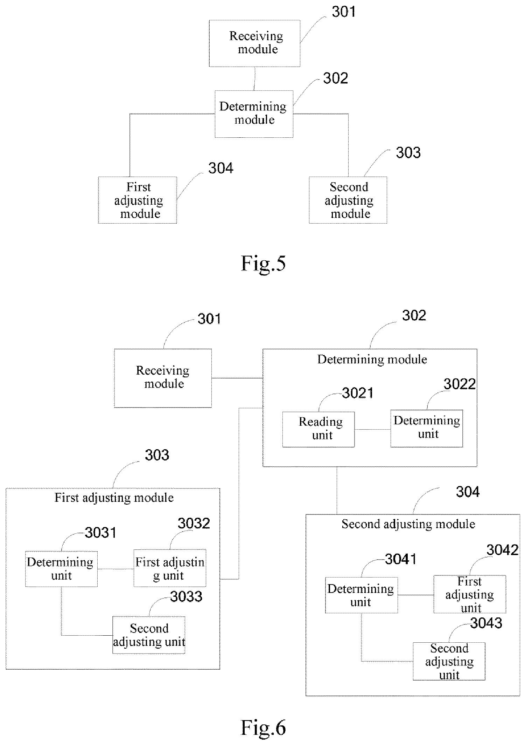

As shown in Fig. 5, the device for adjusting the application's characters according to an embodiment of the present disclosure may include the follows.

A receiving module 301 is configured to receive a command for adjusting application's characters with a first scaling coefficient.

A determining module 302 is configured to determine whether there is a second scaling coefficient based on said first scaling coefficient with respect to said application.

A first adjusting module 303 is configured to adjust said application's characters according to said first scaling coefficient if there is no second scaling coefficient based on said first scaling coefficient for said application.

A second adjusting module 304 is configured to adjust said application's characters according to said second scaling coefficient if there is a second scaling coefficient based on said first scaling coefficient for said application.

In the embodiment of the present disclosure, the receiving module 301 is configured to receive the command for adjusting application's characters with the first scaling coefficient via a set man-machine interaction interface, wherein said man-machine interaction interface is a selection menu, a selection icon or a selection key of scaling coefficients.

In an embodiment, referring to Fig. 6, the determining module 302 according to the embodiment includes the follows.

A reading unit 3021 is configured to read descriptive information in the scaling permission description field of said application.

A determining unit 3022 is configured to determine whether there is a second scaling coefficient based on said first scaling coefficient with respect to said application according to said descriptive information.

The first adjusting module 303 includes the follows.

A determining unit 3031 is configured to determine whether the font size of said application's characters reaches a predetermined threshold.

A first adjusting unit 3032 is configured to adjust said application's characters according to said first scaling coefficient if the font size of said application's characters does not reach the predetermined threshold.

A second adjusting unit 3033 is configured to adjust said application's characters to the system default characters if the font size of said application's characters reaches the predetermined threshold.

The second adjusting module 304 includes the follows.

A determining unit 3041 is configured to determine whether the font size of said application's characters reaches a predetermined threshold.

A first adjusting unit 3042 is configured to adjust said application's characters according to said second scaling coefficient if the font size of said application's characters does not reach the predetermined threshold.

A second adjusting unit 3043 is configured to adjust said application's characters according to said first scaling coefficient if the font size of said application's characters reaches the predetermined threshold.

An embodiment of the present disclosure further provides a terminal including the above-mentioned device for adjusting the application's characters according to the embodiment of the present disclosure. The terminal may be a cellphone, a palmtop computer, an iPad, etc.

In the embodiment of the present disclosure, when receiving the command of adjusting the application's characters with the first scaling coefficient and determining there is a second scaling coefficient based on said first scaling coefficient with respect to said application, said application's characters are adjusted according to said second scaling coefficient; and if there is no second scaling coefficient based on said first scaling coefficient with respect to said application, said application's characters are adjusted according to said first scaling coefficient. The application's characters are flexibly adjusted level by level to allow the application's characters to be adaptively adjusted level by level to fit the application's display interface and to prevent the characters from being cropped and forced out of the screen after adjustment. In addition, adjusting the application's characters level by level is implemented simply and effectively.

Those skilled in the art may appreciate from the description of the above implementations that embodiments of the present disclosure may be implemented by hardware, and may also be implemented by means of software plus necessary general purpose hardware platforms. Based on such an understanding, the technical proposal in embodiments of the present disclosure may be embodied in form of software product that can be stored in a non-volatile storage medium such as CD-ROM, flash disk and removable hard disk and includes several instructions for causing a computer equipment such as a personal computer, a server or a network equipment to carry out the method described in embodiments of the present disclosure.

Those skilled in the art understand that the accompanying drawings are only schematic diagrams of one preferable embodiment and modules or flows in the drawings are not necessary for implementing the present disclosure.

Those skilled in the art can understand that modules in the device of the embodiment may be distributed in the device of the embodiment according to the description of the embodiment, and may also be modified accordingly to be located in one or more devices different from the present embodiment. Modules in the above-mentioned embodiments may be merged into one module, and may also be divided into a plurality of sub-modules.

Sequence numbers in the above-mentioned embodiments of the present disclosure are only for the purpose of description rather than representing preference of embodiments.

## Claims

1. A method for adjusting an application's characters, comprising the step of:
receiving (101) a single command for adjusting application's characters with a first scaling coefficient;
the method being **characterized by** comprising the further steps of determining (102) whether there is a second scaling coefficient based on the first scaling coefficient with respect to the application, wherein the first scaling coefficient and the second scaling coefficient are preset coefficients, the second scaling coefficient being used to further scale the application's characters to a greater extent; and
adjusting the application's characters by one of the following steps:
adjusting (103) the application's characters according to the first scaling coefficient if there is no second scaling coefficient based on the first scaling coefficient with respect to the application; or
adjusting (104) the application's characters according to the second scaling coefficient if there is a second scaling coefficient based on the first scaling coefficient with respect to the application.

2. The method of claim 1, wherein the command of adjusting the application's characters with the first scaling coefficient is received via a set man-machine interaction interface, the man machine interaction interface being a selection menu, a selection icon or a selection key of scaling coefficients.

3. The method of claim 1, wherein determining (102) whether there is a second scaling coefficient based on the first scaling coefficient with respect to the application comprises:
reading descriptive information in a scaling permission description field of the application;
determining whether there is the second scaling coefficient based on the first scaling coefficient with respect to the application according to the descriptive information.

4. The method of claim 1, wherein prior to the adjusting (103, 104) the application's characters according to the first or second scaling coefficient, the method further comprises:
determining (203, 204) whether a font size of the application's characters reaches a predetermined threshold; and
the method further comprising the steps of:
adjusting (207) the application's characters according to the second scaling coefficient if the font size of the application's characters does not reach the predetermined threshold; or
adjusting (208) the application's characters according to the first scaling coefficient if the font size of the application's characters reaches the predetermined threshold.

5. The method of claim 1 or 4, wherein prior to the adjusting the application's characters according to the first or second scaling coefficient, the method further comprises:
determining (203, 204) whether a font size of the application's characters reaches a predetermined threshold;
the method further comprising the steps of:
adjusting (206) the application's characters according to the first scaling coefficient if the font size of the application's characters does not reach the predetermined threshold;
adjusting (205) the application's characters to the system default characters if the font size of the application's characters reaches the predetermined threshold.

6. The method of any one of claims 1 to 5, wherein adjusting (103, 104, 205-208) the application's characters comprises adjusting a font size and a layout of the application's characters.

7. A device for adjusting an application's characters, comprising
a receiving module (301) configured to receive a single command for adjusting application's characters with a first scaling coefficient;
the device being **characterized in that** it further comprises:
a determining module (302) configured to determine whether there is a second scaling coefficient based on the first scaling coefficient with respect to the application, wherein the first scaling coefficient and the second scaling coefficient are preset coefficients, the second scaling coefficient being used to further scale the application's characters to a greater extent;
a first adjusting module (303) configured to adjust the application's characters according to the first scaling coefficient if there is no second scaling coefficient based on the first scaling coefficient with respect to the application;
a second adjusting module (304) configured to adjust the application's characters according to the second scaling coefficient if there is a second scaling coefficient based on the first scaling coefficient with respect to the application.

8. The device of claim 7, wherein the receiving module (301) is configured to receive the command of adjusting application's characters with the first scaling coefficient via a set man-machine interaction interface, the man-machine interaction interface being a selection menu, a selection icon or a selection key of scaling coefficients.

9. The device of claim 7, wherein the determining module (302) comprises:
a reading unit (3021) configured to read descriptive information in a scaling permission description field of the application; and
a determining unit (3022) configured to determine whether there is a second scaling coefficient based on the first scaling coefficient with respect to the application according to the descriptive information.

10. The device of claim 7, wherein the second adjusting module (304) comprises:
a determining unit (3041) configured to determine whether the font size of the application's characters reaches a predetermined threshold;
a first adjusting unit (3042) configured to adjusting the application's characters according to the second scaling coefficient if the font size of the application's characters does not reach the predetermined threshold; and
a second adjusting unit (3043) configured to adjusting the application's characters according to the first scaling coefficient if the font size of the application's characters reaches the predetermined threshold.

11. The device of claim 7, wherein the first adjusting module (303) comprises:
a determining unit (3031) configured to determine whether the font size of the application's characters reaches a predetermined threshold;
a first adjusting unit (3032) configured to adjust the application's characters according to the first scaling coefficient if the font size of the application's characters does not reach the predetermined threshold; and
a second adjusting unit (3033) configured to adjust the application's characters to the system default characters if the font size of the application's characters reaches the predetermined threshold.

12. The device for adjusting an application's characters, according to any one of claims 7 to 11, wherein adjusting (103, 104, 205-208) the application's characters comprises adjusting a font size and a layout of the application's characters.

13. A terminal **characterized in that** the terminal comprises the device of any one of claims 7 to 12.

14. A computer program, which when executing on a processor of a device, performs a method according to any one of claims 1 to 6.

## Patentansprüche

1. Verfahren zum Einstellen der Anwendungstexte, umfassend die folgenden Schritte:
Empfangen (101) eines einzigen Befehls zum Einstellen der Anwendungstexte mit einem ersten Skalierungskoeffizienten;
wobei das Verfahren durch **dadurch gekennzeichnet ist, dass** es die folgenden Schritte zum Bestimmen (102) umfasst, ob ein zweiter Skalierungskoeffizient vorhanden ist, der auf dem ersten Skalierungskoeffizienten in Bezug auf die Anwendung basiert, wobei der erste Skalierungskoeffizient und der zweite Skalierungskoeffizient vorab festgelegte Koeffizienten sind, wobei der zweite Skalierungskoeffizient dazu verwendet wird, die Anwendungstexte in einem größeren Ausmaß weiter zu skalieren; und
Einstellen der Anwendungstexte durch einen der folgenden Schritte:
Einstellen (103) der Anwendungstexte gemäß dem ersten Skalierungskoeffizienten, wenn kein zweiter Skalierungskoeffizient auf Grundlage des ersten Skalierungskoeffizienten in Bezug auf die Anwendung existiert; oder
Einstellen (104) der Anwendungstexte gemäß dem zweiten Skalierungskoeffizienten, wenn ein zweiter Skalierungskoeffizient auf Grundlage des ersten Skalierungskoeffizienten in Bezug auf die Anwendung existiert.

2. Verfahren nach Anspruch 1, wobei der Befehl zum Einstellen der Anwendungstexte mit dem ersten Skalierungskoeffizienten über eine eingerichtete Mensch-Maschine-Interaktionsschnittstelle empfangen wird, wobei die Mensch-Maschine-Interaktionsschnittstelle ein Auswahlmenü, ein Auswahlsymbol oder eine Auswahltaste für Skalierungskoeffizienten ist.

3. Verfahren nach Anspruch 1, wobei das Bestimmen (102), ob ein zweiter Skalierungskoeffizient auf Grundalge des ersten Skalierungskoeffizienten in Bezug auf die Anwendung existiert, Folgendes umfasst:
Lesen beschreibender Informationen in einem Skalierungserlaubnisbeschreibungsfeld der Anwendung;
Bestimmen, ob der zweite Skalierungskoeffizient auf Grundlage des ersten Skalierungskoeffizienten in Bezug auf die Anwendung gemäß den beschreibenden Informationen existiert.

4. Verfahren nach Anspruch 1, wobei vor dem Einstellen (103, 104) der Anwendungstexte gemäß dem ersten oder zweiten Skalierungskoeffizienten das Verfahren Folgendes umfasst:
Bestimmen (203, 204), ob eine Schriftgröße der Anwendungstexte einen vorab festgelegten Schwellenwert erreicht; und
wobei das Verfahren ferner die folgenden Schritte umfasst:
Einstellen (207) der Anwendungstexte gemäß dem zweiten Skalierungskoeffizienten, wenn die Schriftgröße der Anwendungstexte den vorab festgelegten Schwellenwert nicht erreicht; oder
Einstellen (208) der Anwendungstexte gemäß dem zweiten Skalierungskoeffizienten, wenn die Schriftgröße der Anwendungstexte den vorab festgelegten Schwellenwert erreicht.

5. Verfahren nach Anspruch 1 oder 4, wobei vor dem Einstellen der Anwendungstexte gemäß dem ersten oder zweiten Skalierungskoeffizienten das Verfahren ferner Folgendes umfasst:
Bestimmen (203, 204), ob eine Schriftgröße der Anwendungstexte einen vorab festgelegten Schwellenwert erreicht;
wobei das Verfahren ferner die folgenden Schritte umfasst:
Einstellen (206) der Anwendungstexte gemäß dem ersten Skalierungskoeffizienten, wenn die Schriftgröße der Anwendungstexte den vorab festgelegten Schwellenwert nicht erreicht;
Einstellen (205) der Anwendungstexte an die Systemstandardzeichen, wenn die Schriftgröße der Anwendungstexte den vorab festgelegten Schwellenwert erreicht.

6. Verfahren nach einem beliebigen der Ansprüche 1 bis 5, wobei das Einstellen (103, 104, 205-208) der Anwendungstexte das Einstellen einer Schriftgröße und eines Layouts der Anwendungstexte umfasst.

7. Vorrichtung zum Einstellen der Anwendungstexte, umfassend ein Empfangsmodul (301), das dazu ausgelegt ist, einen einzigen Befehl zum Einstellen der Anwendungstexte mit einem ersten Skalierungskoeffizienten zu empfangen;
wobei die Vorrichtung **dadurch gekennzeichnet ist, dass** sie ferner Folgendes umfasst:
ein Bestimmungsmodul (302), das dazu ausgelegt ist, zu bestimmen, ob ein zweiter Skalierungskoeffizient auf Grundlage des ersten Skalierungskoeffizienten in Bezug auf die Anwendung existiert, wobei der erste Skalierungskoeffizient und der zweite Skalierungskoeffizient vorab eingerichtete Koeffizienten sind, wobei der zweite Skalierungskoeffizient dazu verwendet wird, die Anwendungstexte in einem größeren Ausmaß weiter zu skalieren;
ein erstes Einstellungsmodul (303), das dazu ausgelegt ist, die Anwendungstexte gemäß dem ersten Skalierungskoeffizienten einzustellen, wenn kein zweiter Skalierungskoeffizient auf Grundlage des ersten Skalierungskoeffizienten in Bezug auf die Anwendung existiert;
ein zweites Einstellungsmodul (304), das dazu ausgelegt ist, die Anwendungstexte gemäß dem zweiten Skalierungskoeffizienten einzustellen, wenn ein zweiter Skalierungskoeffizient auf Grundlage des ersten Skalierungskoeffizienten in Bezug auf die Anwendung existiert.

8. Vorrichtung nach Anspruch 7, wobei das Empfangsmodul (301) dazu ausgelegt ist, den Befehl zum Einstellen der Anwendungstexte mit dem ersten Skalierungskoeffizienten über eine eingerichtete Mensch-Maschine-Interaktionsschnittstelle zu empfangen, wobei es sich bei der Mensch-Maschine-Interaktionsschnittstelle um ein Auswahlmenü, ein Auswahlsymbol oder eine Auswahltaste mit Skalierungskoeffizienten handelt.

9. Vorrichtung nach Anspruch 7, wobei das Bestimmungsmodul (302) Folgendes umfasst:
eine Leseeinheit (3021), die dazu ausgelegt ist, beschreibende Informationen in einem Skalierungserlaubnisbeschreibungsfeld der Anwendung zu lesen; und
eine Bestimmungseinheit (3022), die dazu ausgelegt ist, zu bestimmen, ob ein zweiter Skalierungskoeffizient auf Grundlage des ersten Skalierungskoeffizienten in Bezug auf die Anwendung gemäß den beschreibenden Informationen existiert.

10. Vorrichtung nach Anspruch 7, wobei das zweite Einstellungsmodul (304) Folgendes umfasst:
eine Bestimmungseinheit (3041), die dazu ausgelegt ist, zu bestimmen, ob die Schriftgröße der Anwendungstexte einen vorab festgelegten Schwellenwert erreicht;
eine erste Einstellungseinheit (3042), die dazu ausgelegt, die Anwendungstexte gemäß dem zweiten Skalierungskoeffizienten einzustellen, wenn die Schriftgröße der Anwendungstexte den vorab festgelegten Schwellenwert nicht erreicht;
eine zweite Einstellungseinheit (3043), die dazu ausgelegt ist, die Anwendungstexte gemäß dem ersten Skalierungskoeffizienten einzustellen, wenn die Schriftgröße der Anwendungstexte den vorab festgelegten Schwellenwert erreicht.

11. Vorrichtung nach Anspruch 7, wobei das erste Einstellungsmodul (303) Folgendes umfasst:
eine Bestimmungseinheit (3031), die dazu ausgelegt ist, zu bestimmen, ob die Schriftgröße der Anwendungstexte einen vorab festgelegten Schwellenwert erreicht;
eine erste Einstellungseinheit (3032), die dazu ausgelegt ist, die Anwendungstexte gemäß dem ersten Skalierungskoeffizienten einzustellen, wenn die Schriftgröße der Anwendungstexte den vorab festgelegten Schwellenwert nicht erreicht; und
eine zweite Einstellungseinheit (3033), die dazu ausgelegt ist, die Anwendungstexte an die Systemstandardzeichen einzustellen, wenn die Schriftgröße der Anwendungstexte den vorab festgelegten Schwellenwert erreicht.

12. Vorrichtung zum Einstellen der Anwendungstexte nach einem der Ansprüche 7 bis 11, wobei das Einstellen (103, 104, 205-208) der Anwendungstexte das Einstellen einer Schriftgröße und eines Layouts an die Anwendungstexte umfasst.

13. Endgerät, **dadurch gekennzeichnet, dass** das Endgerät die Vorrichtung nach einem der Ansprüche 7 bis 12 umfasst.

14. Computerprogramm, das, wenn es auf einem Prozessor einer Vorrichtung abläuft wird, ein Verfahren nach einem der Ansprüche 1 bis 6 ausführt.

## Revendications

1. Procédé d'ajustement de caractères d'une application, comprenant l'étape suivante :
la réception (101) d'une commande unique d'ajustement de caractères d'application avec un premier coefficient de mise à l'échelle ;
le procédé étant **caractérisé en ce qu'**il comprend les autres étapes de détermination (102) du fait qu'il existe ou pas un second coefficient de mise à l'échelle basé sur le premier coefficient de mise à l'échelle par rapport à l'application,
dans lequel le premier coefficient de mise à l'échelle et le second coefficient de mise à l'échelle sont des coefficients prédéfinis, le second coefficient de mise à l'échelle étant utilisé pour mettre en outre à l'échelle les caractères de l'application dans une plus grande mesure ; et
d'ajustement des caractères de l'application par l'une des étapes suivantes :
l'ajustement (103) des caractères de l'application selon le premier coefficient de mise à l'échelle s'il n'existe pas de second coefficient de mise à l'échelle basé sur le premier coefficient de mise à l'échelle par rapport à l'application ; ou
l'ajustement (104) des caractères de l'application selon le second coefficient de mise à l'échelle s'il existe un second coefficient de mise à l'échelle basé sur le premier coefficient de mise à l'échelle par rapport à l'application.

2. Procédé selon la revendication 1, dans lequel la commande d'ajustement des caractères de l'application avec le premier coefficient de mise à l'échelle est reçue via une interface d'interaction homme-machine, l'interface d'interaction homme-machine étant un menu de sélection, une icône de sélection ou une touche de sélection de coefficients de mise à l'échelle.

3. Procédé selon la revendication 1, dans lequel la détermination (102) du fait qu'il existe ou pas un second coefficient de mise à l'échelle basé sur le premier coefficient de mise à l'échelle par rapport à l'application comprend :
la lecture d'informations descriptives dans un champ de description de permission de mise à l'échelle de l'application ;
la détermination du fait qu'il existe ou pas le second coefficient de mise à l'échelle basé sur le premier coefficient de mise à l'échelle par rapport à l'application selon les informations descriptives.

4. Procédé selon la revendication 1, dans lequel avant l'ajustement (103, 104), les caractères de l'application selon le premier ou le second coefficient de mise à l'échelle, le procédé comprend en outre :
la détermination (203, 204) du fait qu'une taille de police des caractères de l'application atteint un seuil prédéterminé ; et
le procédé comprenant en outre les étapes suivantes :
l'ajustement (207) des caractères de l'application selon le second coefficient de mise à l'échelle si la taille de police des caractères de l'application n'atteint pas le seuil prédéterminé ; ou
l'ajustement (208) des caractères de l'application selon le premier coefficient de mise à l'échelle si la taille de police des caractères de l'application atteint le seuil prédéterminé.

5. Procédé selon la revendication 1 ou 4, dans lequel avant l'ajustement des caractères de l'application selon le premier ou le second coefficient de mise à l'échelle, le procédé comprend en outre :
la détermination (203, 204) du fait qu'une taille de police des caractères de l'application atteint ou n'atteint pas un seuil prédéterminé ;
le procédé comprenant en outre les étapes suivantes :
l'ajustement (206) des caractères de l'application selon le premier coefficient de mise à l'échelle si la taille de police des caractères de l'application n'atteint pas le seuil prédéterminé ;
l'ajustement (205) des caractères de l'application sur les caractères par défaut du système si la taille de police des caractères de l'application atteint le seuil prédéterminé.

6. Procédé selon l'une quelconque des revendications 1 à 5, dans lequel l'ajustement (103, 104, 205-208) des caractères de l'application comprend l'ajustement d'une taille de police et d'une disposition des caractères de l'application.

7. Dispositif d'ajustement des caractères d'une application, comprenant
un module de réception (301) configuré pour recevoir une commande unique d'ajustement des caractères d'application avec un premier coefficient de mise à l'échelle ;
le dispositif étant **caractérisé en ce qu'**il comprend en outre :
un module de détermination (302) configuré pour déterminer s'il existe ou pas un second coefficient de mise à l'échelle basé sur le premier coefficient de mise à l'échelle par rapport à l'application, dans lequel le premier coefficient de mise à l'échelle et le second coefficient de mise à l'échelle sont des coefficients prédéfinis, le second coefficient de mise à l'échelle étant utilisé pour mettre en outre à l'échelle les caractères de l'application dans une plus grande mesure ;
un premier module d'ajustement (303) configuré pour ajuster les caractères de l'application selon le premier coefficient de mise à l'échelle s'il n'existe pas de second coefficient de mise à l'échelle basé sur le premier coefficient de mise à l'échelle par rapport à l'application ;
un second module d'ajustement (304) configuré pour ajuster les caractères de l'application selon le second coefficient de mise à l'échelle s'il existe un second coefficient de mise à l'échelle basé sur le premier coefficient de mise à l'échelle par rapport à l'application.

8. Dispositif selon la revendication 7, dans lequel le module de réception (301) est configuré pour recevoir la commande d'ajustement des caractères de l'application avec le premier coefficient de mise à l'échelle via une interface d'interaction homme-machine, l'interface d'interaction homme-machine étant un menu de sélection, une icône de sélection ou une touche de sélection de coefficients de mise à l'échelle.

9. Dispositif selon la revendication 7, dans lequel le module de détermination (302) comprend :
une unité de lecture (3021) configurée pour lire les informations descriptives dans un champ de description de permission de mise à l'échelle de l'application ; et
une unité de détermination (3022) configurée pour déterminer s'il existe ou pas un second coefficient de mise à l'échelle basé sur le premier coefficient de mise à l'échelle par rapport à l'application selon les informations descriptives.

10. Dispositif selon la revendication 7, dans lequel le second module d'ajustement (304) comprend :
une unité de détermination (3041) configurée pour déterminer si la taille de police des caractères de l'application atteint ou n'atteint pas un seuil prédéterminé ;
une première unité d'ajustement (3042) configurée pour ajuster les caractères de l'application selon le second coefficient de mise à l'échelle si la taille de police des caractères de l'application n'atteint pas le seuil prédéterminé ; ou
une seconde unité d'ajustement (3043) configurée pour ajuster les caractères de l'application selon le premier coefficient de mise à l'échelle si la taille de police des caractères de l'application atteint le seuil prédéterminé.

11. Dispositif selon la revendication 7, dans lequel le premier module d'ajustement (303) comprend :
une unité de détermination (3031) configurée pour déterminer si la taille de police des caractères de l'application atteint ou n'atteint pas un seuil prédéterminé ;
une première unité d'ajustement (3032) configurée pour ajuster les caractères de l'application selon le premier coefficient de mise à l'échelle si la taille de police des caractères de l'application n'atteint pas le seuil prédéterminé ; et
une seconde unité d'ajustement (3033) configurée pour ajuster les caractères de l'application sur les caractères par défaut du système si la taille de police des caractères de l'application atteint le seuil prédéterminé.

12. Dispositif d'ajustement des caractères d'une application selon l'une quelconque des revendications 7 à 11, dans lequel l'ajustement (103, 104, 205-208) des caractères de l'application comprend l'ajustement d'une taille de police et d'une disposition des caractères de l'application.

13. Terminal **caractérisé en ce qu'**il comprend le dispositif selon l'une quelconque des revendications 7 à 12.

14. Programme informatique qui, lorsqu'il est exécuté sur un processeur d'un dispositif, met en oeuvre un procédé selon l'une quelconque des revendications 1 à 6.
